# FASCICULE DE BREVET EUROPEEN

(11) **EP 2 404 806 B1**
(45) Date de publication et mention de la délivrance du brevet: **28.05.2014**
(21) Numéro de dépôt: 11305818.4
(22) Date de dépôt: 27.06.2011
(51) Int. Cl.: B62B 3/00, B62B 3/02

(54) **Equipement mobile pour le transfert et le déplacement notamment de meubles**
Wagen zum Verschieben und Transportieren insbesondere von Möbelstücken
Handcart for transferring and moving in particular of pieces of furniture

(30) Priorité: 06.07.2010 FR 1055470
(43) Date de publication de la demande: 11.01.2012
(73) Titulaire: Gardette, Jean-Louis, 42155 Villemontais (FR)
(72) Inventeur: Gardette, Jean-Louis, 42155 Villemontais (FR)
(74) Mandataire: Dupuis, François

(56) Documents cités:
- FR-A1- 2 879 951
- JP-U- 63 104 275
- US-A- 209 519
- US-A1- 2002 071 751
- US-A1- 2005 036 865
- US-A1- 2005 169 736
- US-A1- 2008 012 259

## Description

L'invention se rattache au secteur technique du mobilier notamment utilisé dans le cadre de salons à usage professionnel, ou culturel, ou éducatif, ou dans le cadre de simples opérations de transfert. L'invention se rattache également aux moyens techniques qui permettent le déplacement et le transfert de ce type de mobilier. L'invention se rattache également aux équipements et agencements élévateurs permettant le transfert d'un produit ou d'une charge d'un endroit à un autre.

A l'origine de la démarche du Demandeur, ce dernier a fait de nombreuses constatations relatives à des besoins spécifiques dans la fourniture notamment de mobiliers à l'occasion de manifestations spécifiques. En effet, il est bien connu que dans les foires, les expositions, les salons et de manière générale toutes manifestations à caractères publics ou professionnels dans lesquels des stands sont prévus pour la présentation de produits, que les dits participants utilisent des meubles, meubles-vitrines dans lesquels sont présentés des produits.

Il est par ailleurs connu par le document - FR 2 879 951 - de réaliser un chariot d'atelier intégrant une plateforme mobile élévatrice à l'intérieur d'une structure roulante. Un tel chariot n'est cependant pas applicable à l'invention en considérant la problématique ci-après. Ce document décrit un équipement mobile selon le préambule de la revendication 1.

La problématique réside dans le transport de ces meubles, ce qui n'est pas toujours pratique, et qui entraîne dans certains cas la détérioration de ceux-ci par suite de mauvaises manipulations, chocs ou autres. En outre, les dits meubles ne sont protégés en tant que tels, sauf à prévoir des couvertures, des protections en plastique ou en carton. Ces protections augmentent le volume du meuble et sont quelquefois sources de gêne à la manipulation.

Les meubles, et de manière générale l'ensemble du mobilier destiné à une utilisation pour ce type de manifestation, ne sont eux-mêmes pas adaptés pour faciliter leurs transport et stockage.

De manière plus générale, il peut être nécessaire d'avoir un équipement pratique permettant le transfert et le transport notamment de meubles tout en assurant leur protection.

La démarche du Demandeur a donc été de réfléchir à un nouveau concept permettant la présentation de meubles, mobiliers, avec leur transfert et leur stockage de ces meubles dans de bonnes conditions avec en particulier une garantie de protection pour éviter toutes détériorations.

La solution apportée par le Demandeur est simple et pratique et elle s'applique notamment à des meubles de volumes variés. La solution apportée peut aussi trouver d'autres applications variées pour le transfert d'autres produits et charges, par exemple, pour des palettes de manutention, et de manière plus générale pour le transfert de charges et produits préalablement disposés sur un support.

Selon une première caractéristique de l'invention, l'équipement mobile pour le transfert et le déplacement de charge(s) notamment de meubles du type comprenant une structure roulante formant portique définissant un volume intérieur, dont à chacune des extrémités angulaires sont disposés des montants verticaux reliés entre eux à leur partie supérieure par un cadre, le cadre présentant sur deux côtés transversaux verticalement des colonnes de guidage, le cadre recevant dans son espace intérieur une plateforme élévatrice agencée pour recevoir et prendre appui sur la base profilée d'au moins une charge disposée sur un support de charge(s) à déplacer, la plateforme élévatrice étant susceptible d'être déplacée verticalement, la dite structure comprenant un cadre inférieur en "U", horizontal avec une ouverture d'accès sur l'un des grands côtés, la plateforme élévatrice comprenant un cadre horizontal avec transversalement des rails de chargement profilés en "L" pour constituer un appui sur la base de la charge à transporter, les rails étant reliés à des éléments formant coulisseaux susceptibles de coopérer avec les colonnes de guidage disposées verticalement sur les côtés transversaux du cadre, l'équipement mobile comprenant en outre un mécanisme disposé à partir de la structure portique et son cadre supérieur permettant l'élévation ou l'abaissement de la plateforme, le dit mécanisme étant caractérisé en ce qu'il comprend une chaîne sans fin disposée horizontalement dans la partie supérieure du cadre du portique en étant guidé et renvoyé par des galets fixés sur des supports à partir de longerons transversaux du cadre supérieur, en ce que les galets permettent la fixation de tiges filetées, en ce que l'un des galets est moteur et commandé par une manivelle, et en ce qu'un élément tendeur disposé sur l'un des longerons transversaux autorise le réglage en tension de la chaîne.

Ces caractéristiques et d'autres encore ressortiront bien de la suite de la description.

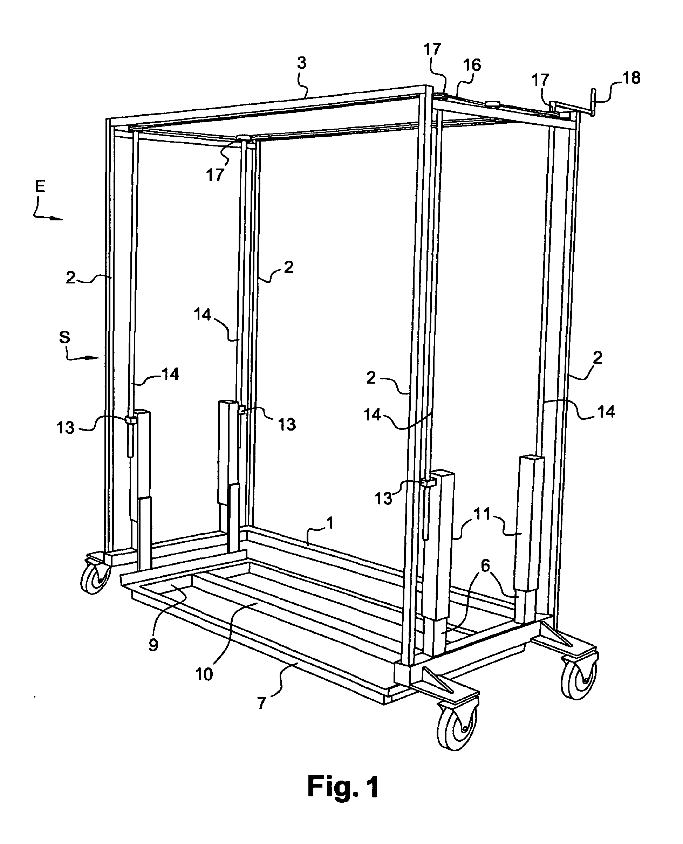

Pour fixer l'objet de l'invention illustré d'une manière non limitative aux figures des dessins, où
La figure 1 est une vue en perspective de 3/4 de l'équipement selon l'invention avant prise en charge d'un meuble selon un exemple non limitatif,

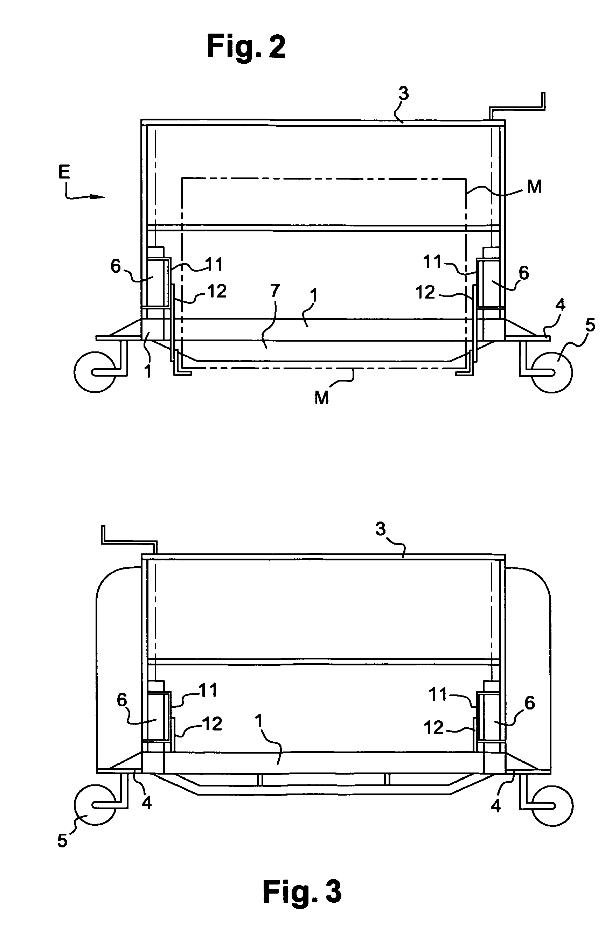

La figure 2 est une vue de face côté ouverture de l'équipement pour le transport du meuble selon un exemple non limitatif,
La figure 3 est une vue arrière de l'équipement représenté figure 2,

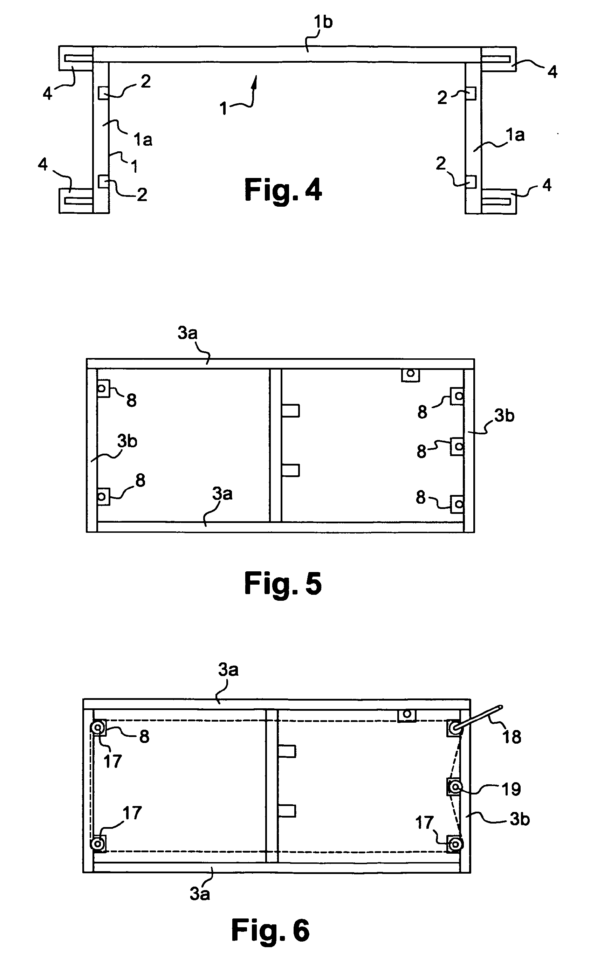

La figure 4 est une vue de dessus du châssis porteur inférieur,
La figure 5 est une vue de dessus du portique supérieur,
La figure 6 est une vue de dessus du portique supérieur avec le système d'élévation,

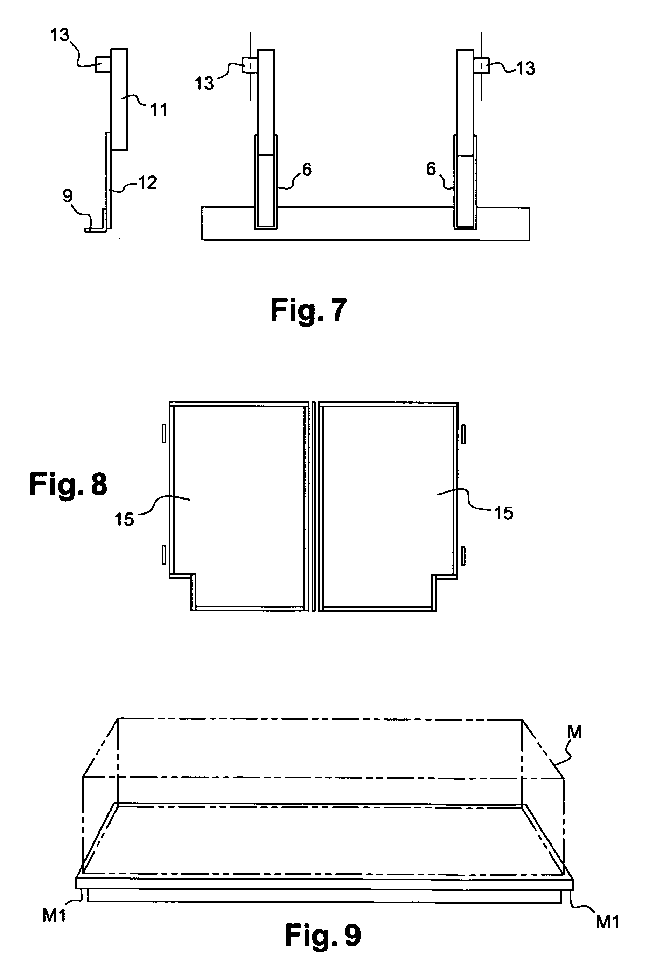

La figure 7 est une vue partielle illustrant le coulisseau de levage,
La figure 8 est une vue représentant les portes disposées côté ouverture de l'équipement,
La figure 9 est une vue illustrant le soubassement du meuble à soulever dans un exemple non limitatif,

Afin de rendre plus concret l'objet de l'invention, on le décrit maintenant d'une manière non limitative illustré aux figures des dessins.

L'équipement permettant le transfert et le transport d'un support de charge(s), est référencé dans son ensemble par (E). La charge peut être par exemple des meubles, des mobiliers destinés à des expositions temporaires, des palettes ou autres, le support de charge(s) étant alors agencé de manière spécifique comme il sera décrit par la suite. Les palettes de manutention sont par exemple de configuration selon la normalisation européenne Pour la compréhension de l'invention et son illustration, on fera référence non limitativement à un transfert de meubles. Le meuble est référencé dans son ensemble par (M).

L'équipement comprend une structure roulante formant portique référencée dans son ensemble par (S). Cette structure roulante forme un cadre inférieur volumétrique, parallépipédique, en définissant un volume à l'intérieur duquel sera disposé le ou les meuble(s) à transférer et à déplacer. Cette structure comprend un cadre inférieur en "U" (1), horizontal et ouvert sur trois côtés, en laissant une ouverture d'accès sur l'un des grands côtés. Ce cadre est réalisé par exemple par des profilés métalliques à section carrée. A chacune des extrémités angulaires sont prévus des montants (2) verticaux reliés entre eux à leur partie supérieure par un cadre supérieur (3) constitué de longerons longitudinaux (3.a) et de longerons transversaux (3.b). Les longerons transversaux (3.b) sont disposés sensiblement dans un plan inférieur au plan des longerons longitudinaux (3.a). Le cadre inférieur (1) est prolongé en débordement par des pattes-supports (4) recevant des moyens de roulement (5) du type roulettes librement orientables.

Le cadre inférieur (1) présente deux côtés transversaux (1.a) et un côté longitudinal arrière (1.b). Sur les côtés transversaux sont disposés verticalement des colonnes de guidage (6) profilées et liées aux dits côtés transversaux par soudure ou autrement.

Le cadre (1) ainsi décrit autorise dans son espace intérieur le positionnement d'une plate-forme élévatrice (7) qui est susceptible de recevoir et de prendre appui sur la base profilée du meuble (M) à déplacer. Cette plate-forme est susceptible d'être déplacée en hauteur dans le volume intérieur de la structure portique et ce grâce à un mécanisme d'élévation ou d'abaissement qui sera décrit par la suite. La plate-forme présente un cadre horizontal avec transversalement des rails de chargement (9), profilés en "L" susceptibles de prendre appui sur la base du meuble ainsi qu'exposé ci-après. Ces rails (9) sont entretoisés longitudinalement par des profilés de liaison(10) situés dans un plan sensiblement inférieur à la partie plate et horizontale des rails. L'aile de chaque rail est reliée à un coulisseau (11) vertical par le biais d'un profilé de liaison (12). Les coulisseaux sont susceptibles d'être introduits le long des colonnes de guidage précitées. Chaque coulisseau reçoit sur un côté un moyen de renvoi et de guidage (13) sous forme d'un écrou carré permettant le passage d'une tige filetée (14) verticale.

Le mécanisme permettant l'élévation ou l'abaissement de la plate-forme par rapport à la structure portique comprend ainsi comme représenté aux dessins une chaîne sans fin (16), disposée horizontalement dans la partie supérieure du cadre du portique, en étant guidée et renvoyée par des galets (17) sur des supports (8) fixés à partir des longerons transversaux (3.b) du cadre supérieur. Ces galets permettent le positionnement pour chacun de la tige filetée correspondante dont l'extrémité pénètre dans l'écrou carré formé et disposé sur chaque coulisseau. L'un des galets est moteur en ce qu'il permet la réception d'une manivelle (18) permettant les opérations de levage ou d'abaissement de la plate-forme (7) précitée. Les galets (17) sont disposés sur la face supérieure des longerons transversaux (3.b), de sorte que ceux-ci présentent des ouvertures de passage (3.c) des tiges filetées (14). En outre, il est prévu le positionnement d'un élément tendeur (19) fixé à partir de l'un des longerons transversaux (3.b). Cet élément tendeur permet de régler la tension de la chaîne.

Parallèlement, le meuble est agencé dans sa partie basse avec des plans d'appui transversaux (M1) qui sont susceptibles de permettre l'appui sur les rails de chargements précités disposés sur la plate-forme élévatrice. Dans cette mise en oeuvre de l'invention, on comprend parfaitement que le ou les meuble(s) sont disposé(s) ainsi dans le volume intérieur de la structure portique roulante. Des portes (15) sont prévues et disposées pour fermer l'ouverture d'accès à la structure portique. L'opérateur peut abaisser la plate-forme élévatrice pour permettre la saisie du ou des meuble(s) puis lorsque celui-ci ou ceux-ci est ou sont correctement placé(s) dans le volume intérieur de l'équipement ainsi réalisé, l'opérateur peut alors procéder à une élévation partielle de la plate-forme en agissant sur la manivelle de levage précitée. De par le positionnement des coulisseaux sur les tubes de guidage et leurs longueurs respectives, il ne peut y avoir d'effets de basculement, ballottement, qui seraient nuisibles au transport du meuble.

Le meuble à transporter présente dans tous les cas un soubassement agencé pour permettre le positionnement des éléments formant rails associés à la plate forme élévatrice. De manière plus générale, la charge à transporter est disposée sur un support de charge qui est agencé avec des plans d'appui transversaux pour permettre le positionnement des éléments formant rails associés à la plateforme élévatrice.

Les avantages ressortent bien de l'invention. On souligne l'intérêt pratique de l'équipement mobile. Cet équipement mobil peut par exemple et aussi être utilisé pour le transfert de la charge dans un camion.

## Revendications

1. Equipement mobile pour le transfert et le déplacement de charge(s) notamment de meubles du type comprenant une structure roulante formant portique (S) définissant un volume intérieur, dont à chacune des extrémités angulaires sont disposés des montants verticaux (2) reliés entre eux à leur partie supérieure par un cadre (3), le cadre (1) présentant sur deux côtés transversaux verticalement des colonnes de guidage (6), le cadre (1) recevant dans son espace intérieur une plate-forme élévatrice (7) agencée pour recevoir et prendre appui sur la base profilée d'au moins une charge (M) disposée sur un support de charge(s) à déplacer, la plateforme élévatrice (7) étant susceptible d'être déplacée verticalement, la dite structure comprenant un cadre inférieur en "Ù"(1), horizontal avec une ouverture d'accès sur l'un des grands côtés, la plateforme élévatrice (7) comprenant un cadre horizontal avec transversalement des rails de chargement (9) profilés en "L" pour constituer un appui sur la base de la charge à transporter, les rails étant reliés à des éléments formant coulisseaux (11) susceptibles de coopérer avec les colonnes de guidage disposées verticalement sur les côtés transversaux (1.a) du cadre (1), l'équipement mobile comprenant en outre un mécanisme disposé à partir de la structure portique (S) et de son cadre supérieur permettant l'élévation ou l'abaissement de la plate-forme, le dit mécanisme étant **caractérisé en ce qu'**il comprend une chaîne sans fin (16) disposée horizontalement dans la partie supérieure du cadre (3) du portique en étant guidé et renvoyé par des galets (17) fixés sur des supports (8) à partir de longerons transversaux (3.b) du cadre supérieur, **en ce que** les galets (17) permettent la fixation de tiges filetées (14), **en ce que** l'un des galets est moteur et commandé par une manivelle (18), et **en ce qu'**un élément tendeur (19) disposé sur l'un des longerons transversaux (3.b) autorise le réglage en tension de la chaîne.

2. Equipement selon la revendication 1 **caractérisé en ce que** le cadre (1) comprend deux côtés transversaux (1.a) et un côté longitudinal arrière (1.b) avec une ouverture vers l'avant et **en ce que** le cadre (1) présente des moyens de roulement (5) disposés sur des pattes-supports (4) solidaires du dit cadre.

3. Equipement selon la revendication 1 **caractérisé en ce que** les rails ont un profil en "L" pour prendre appui sur la base du support de charge(s), et **en ce que** les rails sont entretoisés longitudinalement par des profilés de liaison situés dans un plan inférieur à la partie plate et horizontale des rails pour coopérer avec le support de charge(s).

4. Equipement selon la revendication 1 **caractérisé en ce que** les coulisseaux (11) associés à chaque rail présentent un moyen de renvoi et de guidage (13) sous forme d'un écrou carré permettant le passage d'une tige filetée verticale (14).

5. Equipement selon la revendication 1 **caractérisé en ce que** la face avant de la structure roulante (S) reçoit des portes (15) autorisant l'accès ou non à la plate-forme.

6. Equipement mobile pour le transfert et le déplacement de meubles selon la revendication 1 **caractérisé en ce que** le meuble à transporter est agencé dans sa partie basse avec des plans d'appui transversaux (M1) susceptibles de prendre appui sur les rails de chargement (9) de la plate-forme élévatrice.

7. Equipement selon la revendication 6 **caractérisé en ce que** le support de charge(s) est intégré dans la partie inférieure d'un meuble (10).

## Patentansprüche

1. Mobile Ausrüstung für den Transport und die Verschiebung von Lasten, insbesondere von Möbel, von dem Typ, umfassend eine rollende Struktur, die ein Portal (S) bildet, das ein inneres Volumen bildet, von dem an jedem der winkelförmigen Enden vertikale Ständer (2) angeordnet sind, die untereinander an ihrem oberen Teil durch einen Rahmen (3) verbunden sind, wobei der Rahmen (1) an zwei transversalen Seiten vertikal Führungssäulen (6) aufweist, wobei der Rahmen (1) in seinem inneren Raum eine Hebeplattform (7) aufnimmt, die angeordnet ist, um auf der profilierten Basis wenigstens eine Last (M) aufzunehmen und sich darauf zu stützen, die auf einem zu verschiebenden Lastenträger angeordnet ist, wobei die Hebeplattform (7) geeignet ist, vertikal verschoben zu werden, wobei die genannte Struktur einen unteren Rahmen in "U"-Form (1) umfasst, der mit einer Zugangsöffnung auf einer der großen Seiten ist, wobei die Hebeplattform (7) einen horizontalen Rahmen mit "L"-formig profilierten Beladeschienen (9) transversal umfasst, um eine Stütze auf der Basis der zu transportierenden Ladung zu bilden, wobei die Schienen an Elementen angeschlossen sind, die Schieber (11) bilden, die geeignet sind, mit den Führungssäulen zusammenzuwirken, die vertikal an den transversalen Seiten (1.a) des Rahmens (1) angeordnet sind, wobei die mobile Ausrüstung darüber hinaus einen Mechanismus umfasst, der ab der Portalstruktur (S) angeordnet ist und ihr oberer Rahmen die Erhöhung oder das Absenken der Plattform erlaubt, wobei der genannte Mechanismus **dadurch gekennzeichnet ist, dass** er eine Endloskette (16) umfasst, die horizontal in dem oberen Teil des Rahmens (3) des Portals angeordnet ist, wenn es von den Rollen (17) geführt und zurückgeleitet wird, die auf Trägern (8) ab transversalen Längsträgern (3.b) des oberen Rahmens befestigt sind und dass die Rollen (17) die Befestigung der Gewindestifte (14) erlauben, dass eine der Rollen beweglich und durch eine Kurbel (18) gesteuert ist und dass ein Spannelement (19), das auf einem der transversalen Längsträger (3.b) angeordnet ist, die Spannungseinstellung der Kette zulässt.

2. Ausrüstung gemäß Anspruch 1, **dadurch gekennzeichnet, dass** der Rahmen (1) zwei transversale Seiten (1.a) und eine hintere Längsseite (1.b) mit einer Öffnung nach vorn umfasst und dass der Rahmen (1) Rollmittel (5) umfasst, die auf fest mit dem Rahmen befestigten Trägerklauen (4) befestigt sind.

3. Ausrüstung gemäß Anspruch 1, **dadurch gekennzeichnet, dass** die Schienen ein Profil in "L"-Form haben, um sich auf der Basis des Lastenträgers aufzustützen, und dass die Schienen in Längsrichtung durch Verbindungsprofile abgesteift sind, die sich in einer unteren Ebene zum flachen und horizontalen Teil der Schienen befinden, um mit dem Lastenträger zusammenzuwirken.

4. Ausrüstung gemäß Anspruch 1, **dadurch gekennzeichnet, dass** die jeder Schiene zugeordneten Schieber (11) ein Rücksende- und Führungsmittel (13) in Form einer quadratischen Mutter aufweisen, die den Durchgang eines vertikalen Gewindestiftes (14) erlaubt.

5. Ausrüstung gemäß Anspruch 1, **dadurch gekennzeichnet, dass** die vordere Seite der rollenden Struktur (S) Türen (15) aufweist, die den Zugang zur Plattform erlauben oder nicht.

6. Mobile Ausrüstung für den Transfer und die Verschiebung von Möbeln gemäß Anspruch 1, **dadurch gekennzeichnet, dass** das zu transportierende Möbel in seinem unterem Teil mit transversalen Stützelementen (Ml) angeordnet ist, die geeignet sind, sich auf den Beladeschienen (9) der Hebeplattform aufzustützen.

7. Ausrüstung gemäß Anspruch 6, **dadurch gekennzeichnet, dass** der Beladeträger in den unteren Teil eines Möbels (10) integriert ist.

## Claims

1. Mobile equipment for the transfer movement of a load or loads, notably furniture units of the type incorporating a rolling structure forming a gantry (S) enclosing an inner volume with, at each of the angular extremities, vertical uprights (2) interconnected at their top by a frame (3); the frame (1) has - on two transversal sides - vertical guidance columns (6); the interior volume within the frame incorporates an lifting platform (7) designed to receive bear on the profiled base of at least one load (M) positioned on a mounting for the load(s) to be moved; the lifting platform (7) is able to be moved vertically; the said structure includes a lower U-shaped frame (1) that is horizontal with an aperture for access on one of the large sides; the lifting platform (7) includes a horizontal frame with, transversally, L-profile loading rails (9) to constitute a bearing point on the base of the load to be transported; the rails are connected to components forming slides (11) able to interoperate with the guidance columns located vertically on the transversal sides (1.a) of the frame (1); the mobile equipment also includes a mechanism extending from the gantry structure (S), and its upper frame allows the elevation or lowering of the platform; the said mechanism is **characterized by** the fact that it includes an endless chain (16) positioned horizontally within the upper part of the frame (3) of the gantry, being guided and returned by rollers (17) fixed onto mountings (8) from transversal rails (3.b) of the upper frame, and by the fact that the rollers (17) allow the securing of threaded rods (14), and by the fact that one of the rollers is motor-driven and controlled by a crank (18), and by the fact that a tensioning device (19) located on one of the transversal rails (3.b) allows adjustment of the tension of the chain.

2. Equipment according to claim 1, **characterized by** the fact that the frame (1) incorporates two transversal sides (1.a) and a rear longitudinal side (1.b) with an aperture towards the front, and by the fact that the frame (1) has means of rolling (5) located on mounting lugs (4) integral with the said frame.

3. Equipment according to claim 1, **characterized by** the fact that the rails have an L-shaped profile to bear on the base of the load(s) mounting, and by the fact that the rails are spaced longitudinally by connecting section bars positioned at a level that is lower than the flat and horizontal part of the rails, to interoperate with the load(s) mounting.

4. Equipment according to claim 1, **characterized by** the fact that the slides (11) associated with each rail have a means of return and guidance (13) in the form of a square nut allowing the passage of a vertical threaded rod (14).

5. Equipment according to claim 1, **characterized by** the fact that the front face of the rolling structure (S) incorporates doors (15) allowing access, or preventing access, to the platform.

6. Mobile equipment for the transfer and movement of furniture units in accordance with claim 1, **characterized by** the fact that the furniture unit to be transported is fitted at the bottom with transversal bearing surfaces (M1) able to bear on the loading rails (9) of the elevating platform.

7. Equipment according to claim 6, **characterized by** the fact that the load(s) mounting is incorporated into the bottom of a furniture unit (10).
